Europäisches Patentamt

European Patent Office

Office européen des brevets

(11) Veröffentlichungsnummer: **0 330 173**
**A1**

(12) EUROPÄISCHE PATENTANMELDUNG

(21) Anmeldenummer: 89103081.9

(51) Int. Cl.⁴: **A61C 5/02**

(22) Anmeldetag: 22.02.89

(30) Priorität: 23.02.88 DE 3805580

(43) Veröffentlichungstag der Anmeldung:
30.08.89 Patentblatt 89/35

(84) Benannte Vertragsstaaten:
AT BE CH DE ES FR GB GR IT LI LU NL SE

(71) Anmelder: **Levy, Guy**
**49, rue Croix de Regnier**
**F-13004 Marseille(FR)**

(72) Erfinder: **Levy, Guy**
**49, rue Croix de Regnier**
**F-13004 Marseille(FR)**

(74) Vertreter: **Reinhard, Skuhra, Weise**
**Leopoldstrasse 51**
**D-8000 München 40(DE)**

(54) Zahnwurzelbearbeitungsinstrument.

(57) Bei einem Instrument zur Bearbeitung von Zahnwurzeln, insbesondere nach Art einer K- bzw. H-
Feile, das einen Aufnahmeabschnitt (11) zum Halten
des Instruments und einen Arbeitsabschnitt (14) in
Form einer Rundfeile mit einer schraubenförmigen
Schneide (15) und einem vorderen schneidenfreien
Endabschnitt (16) aufweist, der sich an den Arbeitsabschnitt anschließt, ist zur Verringerung der Gefahr
einer unerwünschten Beschädigung der Zahnwurzelkanalwand (17) und eines Bruchs des in den Kanal
eingeführten Instrumententeils eine Abrundung des
Endabschnitts vorgesehen, die sich bei einer Alternative vorzugsweise über den gesamten Durchmesser des Instruments erstreckt und bevorzugt paraboloidförmig ausgebildet ist. Bei einer anderen Ausgestaltung ist die kegelförmige Spitze des Endabschnitts abgerundet und geht in Längsrichtung kontinuierlich in die Außenwand jedes Schneidenganges
über, wobei die vorderen ersten Schneidengänge
einen negativen Schneidewinkel aufweisen.

Fig.3

## Zahnwurzelbearbeitungsinstrument

Die Erfindung betrifft ein Instrument zur Bearbeitung von Zahnwurzeln mit einem Aufnahmeabschnitt zum Halten des Instruments und einem Arbeitabschnitt in Form einer Rundfeile mit wenigstens einer schraubenförmigen Schneide und einem vorderen schneidenfreien Endabschnitt, der sich an den Arbeitsabschnitt anschließt insbesondere nach Art einer K- bzw. einer H-Feile.

Die mit dem Instrument vorzunehmende Bearbeitung von Zahnwurzeln besteht aus Katheterisieren und Feilen. Beim Katheterisieren wird der Verlauf des Wurzelkanals dargestellt, um diesen bis zum Apex hin aufbereiten zu können und um ein Abfüllen des aufbereiteten Wurzelkanals zu ermöglichen. Nach Aufsuchen des Verlaufs des Wurzelkanals wird dieser durch eine Feilenbewegung beim Katheterisieren ausgearbeitet.

In der endodentorischen Behandlungstechnik ist bereits ein Instrument der eingangs genannten Art bekannt. Dieses Instrument wird als Feile bezeichnet und ermöglicht gleichzeitig das Aufsuchen und Feilen des Kanalverlaufes, wobei für das Feilen alternierende Translationsbewegungen und für das Katheterisieren eine Kombination von Translations- und/oder Rotationsbewegung angewandt wird, um die Feile im Kanal vorwärts zu bewegen.

Eine sogenannte K-Feile wird durch Torsion eines vierkantigen Rohlings hergestellt. Die K-Feile weist eine Ganghöhe von 2 bis 2,5 Schneiden pro Millimeter und einen Tangentenwinkel (Winkel zwischen der Tangente an die mittlere Schneide der Helix und der Instrumentenlängsachse) von 37 bis 40 Grad auf. Der vordere schneidenfreie Endabschnitt ist nach ISO-Norm kegelförmig ausgebildet und weist einen spitzen Winkel von 75 Grad ± 15 Grad auf.

Als nachteilig hat es sich bei dem Katheterisieren eines gekrümmten kleinvolumigen Wurzelkanals in der Praxis herausgestellt, daß die K-Feile zwar unter Eigenverformung dem aufzusuchenden Wurzelkanalverlauf folgt, dabei jedoch das Problem besteht, daß die spitze Ausbildung des vorderen Endabschnitts bei Wurzelkanalabkrümmungen die Wurzelkanalwand und damit das Dentin beschädigt. Außerdem führt die Ausbildung des vorderen Endabschnitts der K-Feile dazu, daß in Wurzelkanalkrümmungsbereichen eine erhöhte Beanspruchung des Instruments, insbesondere im Bereich seines vorderen Endes auftritt, die zu einem Bruch des Instruments führen kann. Diese erhöhte Beanspruchung rührt von einer flächigen Beaufschlagung und der daraus resultierenden erhöhten Reibung im vorderen schneidenfreien Endabschnitt her. Derartige Eingriffsverhältnisse können auch zu einer ungewünschten Wurzelkanalwandbeschädigung führen.

Bekannt ist in der endodentorischen Behandlungstechnik ferner eine sogenannte H-Feile, mit der die Reinigung und Formgebung eines aufgesuchten Kanals durchgeführt wird. Diese H-Feile wird aus einem konischen Rohling geschliffen, wobei durch eine Schleifscheibe auf dem gesamten Arbeitsabschnitt der Feile eine fortlaufende Helix geschaffen wird, die eine Schraubenbahn darstellt. Üblicherweise beträgt der Öffnungswinkel der Schneide bezüglich der Achse, der sogenannte Schneidewinkel, etwa 45°. Hieraus ergibt sich, daß die H-Feile nur auf Zug effizient arbeitet.

Auch die bisher bekannte H-Feile besitzt eine kegelförmig ausgebildete Spitze. Die Probleme, die oben im Zusammenhang mit der Anwendung der bisher bekannten H-Feile auftreten, gelten auch für die H-Feile bzw. Hedström-Feile.

Der Erfindung liegt die Aufgabe zugrunde, ein Instrument zur Bearbeitung von Zahnwurzeln verfügbar zu machen, mit dem auch in gekrümmten Bereichen des Zahnwurzelverlaufs ein wirkungsvolles Katheterisieren und Ausarbeiten des Zahnwurzelkanals ohne Beschädigung der Kanalwand ermöglicht wird.

Erfindungsgemäß wird diese Aufgabe durch die im Anspruch 1 bzw. 5 gekennzeichneten Merkmale gelöst. Bevorzugte Merkmale, die die Erfindung vorteilhaft weiterbilden, sind in den jeweils nachgeordneten Ansprüchen enthalten.

Aufgrund der erfindungsgemäßen Ausbildung des Instruments mit einer Abrundung des vorderen schneidenfreien Endabschnitts wird vorteilhaft die Gefahr vermieden, daß das Instrument in gekrümmten Zahnwurzelbereichen die Zahnwurzelkanalwand verletzt bzw. durchtritt. Die mechanische Beanspruchung des erfindungsgemäß ausgestatteten Instruments ist im Vergleich zu vorbekannten K-Feilen in Krümmungsbereichen von Zahnwuzelkanälen erheblich geringer, weil statt möglicher flächiger Reibbeaufschlagung nur noch eine Beanspruchung auftritt, die aus einer punkt- oder linienförmigen Berührung des vorderen schneidenfreien Endabschnitts des Instruments herrührt.

Gemäß einer bevorzugten Ausgestaltung erstreckt sich die Abrundung des vorderen schneidenfreien Endabschnitts über den gesamten Durchmeser des Instruments, der an dem Ende des Arbeitsabschnitts vorliegt, an das sich der Endabschnitt anschließt.

Vorzugsweise entspricht die Länge des Endabschnitts mindestens der Größe des halben Durchmessers und höchstens der Größe von dreiviertel des Durchmessers des Arbeitsabschnitts an dem dem Endabschnitt zugewandten Ende. Hierdurch ergeben sich auch bei stark gekrümmten Zahnwurzelkanalverläufen optimale Bedingungen für das Katheterisieren, Feilen und die mechanische Beanspruchung des Instruments.

Gemäß einer bevorzugten Ausgestaltung der Erfindung ist der Endabschnitt parboloidförmig ausgebildet. Alternativ zu dieser paraboloidförmigen Ausbildung ist die Abrundung vorzugsweise über den gesamten Endabschnitt mit einem konstanten Radius gebildet, der höchstens der Größe des halben Durchmessers des Arbeitsabschnitts an dem den Endabschnitt zugewandten Ende entspricht.

Gemäß der im Anspruch 5 gekennzeichneten Ausgestaltung der Erfindung wird in vorteilhafter Weise ein Instrument geschaffen, dessen Spitze in Längsrichtung und seitlich nicht an der Arbeit der Feile teilnimmt. In Längsrichtung geht die abgerundete Spitze glatt bzw. kontinuierlich in die Außenwand der Schneidengänge über, wobei im Querschnitt eine, zwei oder drei Schneiden vorgesehen sind. In seitlicher Richtung wird durch die Formgestaltung der ersten zwei oder drei Schneidengänge erreicht, daß vorteilhaft keine Beschädigung der Wandung des Kanals mangels Schneidwirkung auftritt. Durch die vorgenommene gezielte Ausbildung des Instruments im vorderen Endbereich werden somit günstige Arbeitseigenschaften erzielt, die denen herkömmlicher H-Feilen überlegen sind.

Gemäß einer bevorzugten Ausgestaltung der Erfindung beträgt der negative Schneidewinkel an den ersten Schneidengängen etwa 20° und nimmt nach zwei oder drei Schneidengängen auf einen positiven Winkel von etwa 20° zu. Hierdurch wird in vorteilhafter Weise erreicht, daß die Längsschneidewirkung nach den ersten zwei oder drei Schneidengängen zunehmend wirksamer wird.

Nach einer weiteren Ausgestaltung der Erfindung nimmt bei den ersten Schneidgängen die Tiefe der Schneiden von dem vorderen Endabschnitt zu dem hinteren Ende des Arbeitsabschnittes bei zylindrischem Grundkörper zu. Hierdurch wird in vorteilhafter Weise eine besondere Flexibilität des Instruments erreicht.

Die ersten Schneidgänge des Instruments besitzen vorzugsweise einen Öffnungswinkel der Schneide bezüglich der Achse (Tangentenwinkel) von ≤ 60°, wobei bevorzugt der Öffnungswinkel bis zum hinteren Ende des Arbeitsabschnitts auf etwa 40° abnimmt. Hierdurch wird im oberen Abschnitt der Feile in günstiger Weise bei der Drehung eine größere Schneidwirkung erreicht als an der Spitze.

Nachfolgend wird die Erfindung anhand eines in den beigefügten Figuren dargestellten Ausführungsbeispiels einer K-Feile näher erläutert. Es zeigen :

Figur 1 eine Seitenansicht eines Aufführungsbeispiels eines Instruments zur Bearbeitung von Zahnwurzeln;

Figur 2 eine vergrößerte Seitenansicht des vorderen Endbereichs des Instruments von Fig. 1; und

Figur 3 einen Schnitt durch einen Zahnwurzelkanal mit einem abgekrümmten Bereich, in den das Instrument eingeführt ist.

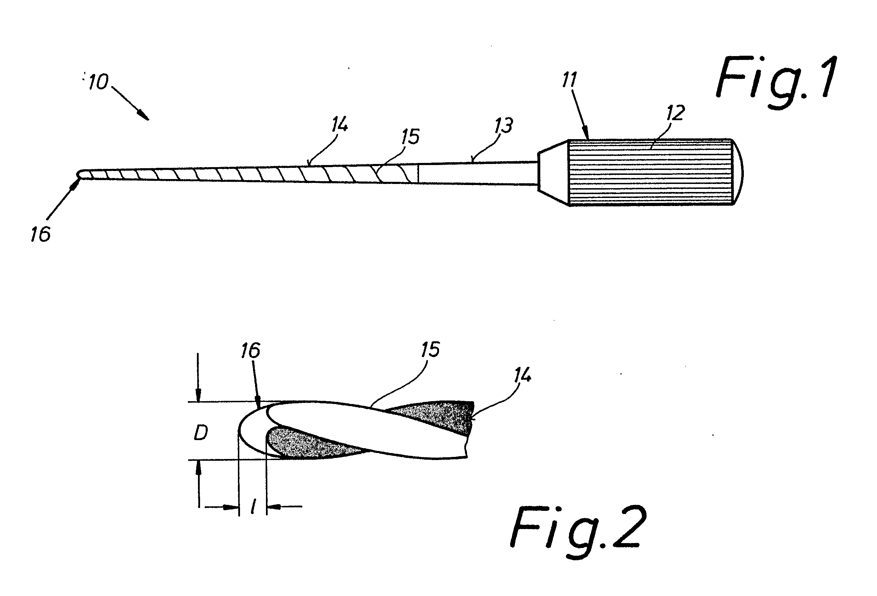

Figur 1 zeigt eine Seitenansicht einer Ausbildungsform eines erfindungsgemäßen Instruments 10 zur Bearbeitung von Zahnwurzeln, insbesondere zum Katheterisieren und Ausfeilen von Zahnwurzelkanälen. Das Instrument 10 besteht aus einem Aufnahmeabschnitt 11 zum Halten des Instruments, der in einen Instrumentenhalter, beispielsweise den Antriebskopf eines motorbetriebenen Handstücks eingesetzt werden kann. Der Aufnahmeabschnitt 11 ist zylinderförmig abgebildet und weist an den Zylinderaußenflächen eingeformte Nuten 12 auf, deren Orientierung parallel zueinander und parallel zu der Symmetrielängsachse des Instruments 10 ist.

Von dem Aufnahmeabschnitt 11 setzt sich das Instrument 10 mit einem schaftähnlichen Zwischenstück 13 mit einem vergleichsweise geringeren Durchmesser fort, der in einen Arbeitsabschnitt 14 übergeht. Der Arbeitsabschnitt 14 hat die Form einer Rundfeile und besitzt schraubenförmige Schneiden 15, die sich von dem Zwischenstück 13 bis zu einem vorderen schneidenfreien Endabschnitt 16 erstrecken. Der Arbeitsabschnitt 14 läuft zu dem Endabschnitt 16 mit einer geringfügigen Konizität zu.

Der vordere Teil des Instruments 10 ist in Figur 2 vergrößert dargestellt. Deutlich erkennbar ist der schneidenfreie Endabschnitt 16, der bei dem dargestellten Ausführungsbeispiels paraboloidförmig ausgebildet ist und sich von dem Ende der Schneiden 15 über eine Länge 1 erstreckt. In Figur 2 ist ferner der Durchmesser D des Instruments 10 an dem Ende des Arbeitsabschnitts 14 dargestellt das dem Endabschnitt 16 zugewandt ist.

Die Länge 1 des Endabschnitts 16 entspricht gemäß der Erfindung mindestens der Größe des halben Durchmessers D und höchstens der Größe von dreiviertel D.

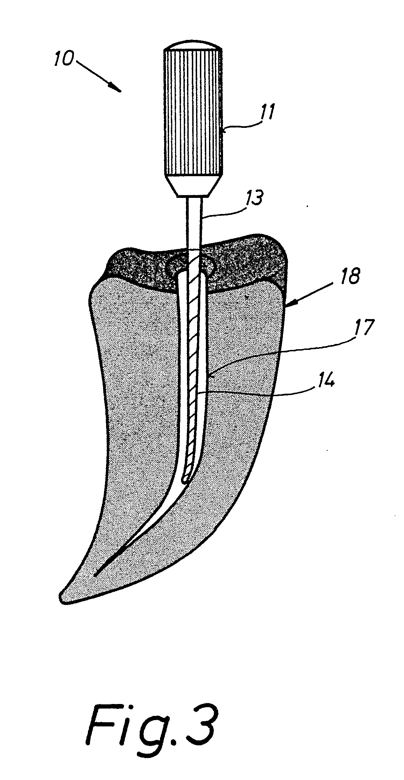

Das Instrument 10 besteht wenigstens im Bereich des Zwischenstücks 13, des Arbeitsabschnitts 14 und des Endabschnitts 16 aus einem rostfreien Stahl (Operationsstahl), wobei der Aufnahmeabschnitt 11 entweder einstückig oder als separates Teil gebildet ist. Bei der Bildung als separates Teil kann der Aufnahmeabschnitt einen anderen Werkstoff mit entsprechenden Festigkeitseigenschaften aufweisen. Die Verformbarkeit des Arbeitsabschnitts 14 nimmt in Richtung auf den Endabschnitt 16 zu. Hierdurch kann, wie in Figur 3 veranschaulicht, das Instrument 10 besonders gut vorgegebenen Zahnwurzelkanalkrümmungen folgen.

In der Darstellung von Figur 3 ist die vorteilhafte Eigenschaft des neuen Instruments 10 zu erkennen, wonach der Endabschnitt 16 in gekrümmten Bereichen eines Wurzelkanals 17 nur eine punkt- oder linienförmige Berührung mit der Wand des Wurzelkanals 17 hat. Eine den empfindlichen vorderen Teil des Instruments 10 beaufschlangende ungünstige Flächenreibbelastung bei der Arbeit mit dem Instrument, die in Extremfällen zu einem Festklemmen und Brechen des vorderen Instrumententeils führen kann, wird somit wirkungsvoll vermieden. Außerdem besteht nicht die Gefahr, daß das Instrument beim Katheterisieren und/oder Feilen in unerwünschter Weise die Wand des Wurzelkanals 17 im Krümmungsbereich beschädigt oder durchtritt.

**Ansprüche**

1. Instrument zur Bearbeitung von Zahnwurzeln, mit einem Aufnahmeabschnitt zum Halten des Instruments und einem Arbeitsabschnitt (14) in Form einer Rundfeile mit wenigstens einer schraubenförmigen Schneide (15) und einem vorderen schneidenfreien Endabschnitt (16), der sich an den Arbeitsabschnitt (14) anschließt, insbesondere nach Art einer K-Feile,
**dadurch gekennzeichnet,**
daß der vordere Endabschnitt (16) eine sich über den gesamten Durchmesser des Instrumentes erstreckende und glatt in den Arbeitsabschnitt (14) übergehende Abrundung aufweist.

2. Instrument nach Anspruch 1,
dadurch gekennzeichnet,
daß die Länge (1) des Endabschnitts (16) mindestens der Größe des halben Durchmessers (D) und höchstens der Größe von 3/4 des Durchmessers (D) des Arbeitsabschnitt (14) an dem dem Endabschnitt (16) zugewandten Ende entspricht.

3. Instrument nach Anspruch 1 oder 2,
dadurch gekennzeichnet,
daß die Abrundung über dem gesamten Endabschnitt (16) mit einem konstanten Radius gebildet ist, der höchstens der Größe des halben Durchmessers (D) des Arbeitsabschnitts (14) an dem dem Endabschnitt (16) zugewandten Ende entspricht.

4. Instrument nach Anspruch 1 oder 2,
dadurch gekennzeichnet,
daß der Endabschnitt (16) paraboloidförmig ausgebildet ist.

5. Instrument zur Bearbeitung von Zahnwurzeln, mit einem Aufnahmeabschnitt zum Halten des Instruments und einem Arbeitsabschnitt in Form einer Rundfeile mit wenigstens einer schraubenförmigen Schneide und einem vorderen schneidenfreien Endabschnitt, der sich an den Arbeitsabschnitt anschließt, insbesondere nach Art einer H-Feile,
dadurch gekennzeichnet,
daß der vordere Endabschnitt kegelförmig mit einem spitzen Winkel von ≤ 40° mit abgerundeter Spitze ausgebildet ist und in Längsrichtung kontinuierlich in die Außenwand jedes Schneidenganges übergeht, wobei die vorderen ersten Schneidengänge einen negativen Schneidewinkel aufweisen.

6. Instrument nach Anspruch 5,
dadurch gekennzeichnet,
daß der negative Schneidewinkel an den ersten Schneidengängen etwa 20° beträgt und nach zwei oder drei Schneidengängen auf 20° positiv zunimmt.

7. Instrument nach Anspruch 5 oder 6,
dadurch gekennzeichnet,
daß bei den ersten Schneidengängen die Tiefe der Schneiden von dem vorderen Endabschnitt zum hinteren Ende des Arbeitsabschnitts bei zylindrischem Grundkörper zunimmt.

8. Instrument nach einem der Ansprüche 5 bis 7,
dadurch gekennzeichnet,
daß die ersten Schneidengänge einen Öffnungswinkel der Schneide bezüglich der Längsachse des Instrumentes von ≤ 60° aufweisen.

9. Instrument nach Anspruch 8,
dadurch gekennzeichnet,
daß der Öffnungswinkel bis zum hinteren Ende des Arbeitsabschnitts auf etwa 40° abnimmt.

*Fig.1*

*Fig.2*

EP 0 330 173 A1

Fig.3

Europäisches Patentamt

EUROPÄISCHER RECHERCHENBERICHT

Nummer der Anmeldung

EP 89 10 3081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 547 718 (CRUSSOL)<br>* Seite 1, Zeilen 25-28; Figur 1 *<br>--- | 1,4 | A 61 C 5/02 |
| X | EP-A-0 118 992 (J. ROANE)<br>* Seite 6, Zeile 17 - Seite 8, Zeile 16; Figur 3 *<br>--- | 1,2,5 | |
| X | US-A-4 299 571 (McSPADDEN)<br>* Spalte 2, Zeilen 7-65; Figur 1 *<br>----- | 1,4,5 | |

|  |
|---|
| RECHERCHIERTE SACHGEBIETE (Int. Cl.4) |
| A 61 C<br>B 63 D |

Der vorliegende Recherchenbericht wurde für alle Patentansprüche erstellt

| Recherchenort | Abschlußdatum der Recherche | Prüfer |
|---|---|---|
| DEN HAAG | 31-05-1989 | VANRUNXT J.M.A. |